# EUROPEAN PATENT SPECIFICATION

(11) **EP 4 053 535 B1**
(45) Date of publication and mention of the grant of the patent: **07.08.2024**
(21) Application number: 21159817.2
(22) Date of filing: 01.03.2021
(51) Int. Cl.: G01N 15/02, G01N 15/00

(54) **PARTICLE SENSOR, DEVICE AND METHOD FOR DETECTING PARTICLES**
PARTIKELSENSOR, VORRICHTUNG UND VERFAHREN ZUM NACHWEIS VON PARTIKELN
CAPTEUR DE PARTICULES, DISPOSITIF ET PROCÉDÉ DE DÉTECTION DE PARTICULES

(43) Date of publication of application: 07.09.2022
(73) Proprietor: Q.ant GmbH, 70565 Stuttgart (DE)
(72) Inventor: Förtsch, Michael, 91522 Ansbach (DE); Hengesbach, Stefan, 70469 Stuttgart (DE); Hattermann, Helge, 72124 Pliezhausen (DE)
(74) Representative: Trumpf Patentabteilung

(56) References cited:
- US-A- 4 525 627
- US-A- 5 530 551
- US-A1- 2018 038 781

## Description

The invention relates to an (optical) particle sensor that is configured to detect particles, in particular to characterize particles, in a measurement region that is accessible to particles. The invention also relates to a device comprising: a measurement chamber having a measurement region that is accessible to particles, and at least one particle sensor of the above-mentioned type that is configured to detect the particles, in particular to characterize the particles, in the measurement region. The invention also relates to a method for detecting particles.

Particles that flow through a measurement region or measurement volume can be detected or characterized by the attenuation of light that passes through the measurement region. In the context of the present application, the term "characterization of particles" relates to the determination of properties of the particles other than the simple detection of the presence of one or more particles in the measurement region. The characterization of a particle may include the determination of the size or diameter of the particle, the position/trajectory of the particle, the velocity of the particle, etc.

When a particle flows through a light beam that propagates through the measurement region with a pre-defined intensity distribution, the particle scatters, reflects and/or absorbs part of the intensity of the light beam. In a particle sensor that is based on light extinction, the remaining intensity of the light beam after passing through the measurement region is detected by a photodetector. A particle that passes through the light beam causes a reduced signal intensity on the photodetector during the time of passage through the light beam. The attenuation of the signal amplitude that is measured by the photodetector is proportional to the portion of the cross-section of the intensity distribution of the light beam that is blocked by the particle and inversely proportional to the overall cross-section of the intensity distribution of the light beam. The smaller the size or cross-section of the particle in relation to the cross-section of the light beam, the smaller the (relative) attenuation of the signal amplitude. Therefore, when the particles to be detected are small, especially in the case of particle sizes in the nanometer and micrometer range, established particle sensors that are based on light extinction meet their limitations. US 5,132,548 discloses an optical particle sensor for vacuum applications. The particle sensor comprises photocells to detect light scattered by particles when passing through a light beam. The photocells are arranged in a sensor chamber and their faces are protected against corrosive gases by a transparent vacuum grease. US 4 525 627 discloses the features of the preamble of claim 1.

### Object of the Invention

The invention relates to a particle sensor that is configured to improve the detection of particles having small particle sizes, to a device that comprises such a particle sensor, and to a method for detecting particles.

### Subject-matter of the Invention

According to a first aspect, this object is achieved by a particle sensor according to claim 1.

The particle detector according to this aspect of the invention is typically configured to determine / calculate a difference or difference signal between a first electronic signal that is related or that corresponds to the intensity that is detected by the first photodetector and a second electronic signal that is related or that corresponds to the intensity that is detected by the second photodetector. The determination of the difference signal may be performed in the analog domain or after analog-to-digital conversion of the first and the second electronic signals.

The inventors have found that the minimum size of particles that can be detected by a conventional particle sensor is limited by the intensity stability of the light beam: In case that the attenuation of the signal that is detected by the photodetector when a particle passes through the light beam is smaller than the intensity fluctuations of the light beam, it is not possible to detect that particle, more specifically, to distinguish the attenuation due to the particle from the noise of the light source. Therefore, in a conventional particle detector, the maximum of the intensity fluctuations of the light source has to be smaller than the amount of attenuation of the intensity signal that is caused by the smallest particle to be detected by the particle sensor. However, it is possible to reduce or suppress the influence of the intensity fluctuations of the light source on the particle detection, thus improving the detection of small particles. This is the case with the particle sensor according to the invention that splits the light beam (more precisely: the power of the light beam) into two partial beams that propagate along the signal path and the reference path, respectively. By basing the detection of the particles on the difference of the intensity signals, the intensity fluctuations of the light source can be suppressed, as these fluctuations are detected both by the first photodetector arranged in the signal path and the second photodetector arranged in the reference path. In this way, the attenuation of the partial beam due to particles that pass through the measurement region is detected with an improved signal-to-noise ratio, as the difference between the intensities detected by the photodetectors and the difference signal that is determined therefrom are largely insensitive to fluctuations of the intensity of the light beam.

The suppression of fluctuations is most effective when the intensity of the first partial beam that is detected by the first photodetector is equal to the intensity of the second partial beam that is detected by the second photodetector when no particles are present in the measurement region. Within the context of this application, the term "no particles are present" signifies that no particles that are detectable by the particle detector are present in the measurement region. In other words, this expression does not exclude that particles that are too small to be detected (e.g. individual atoms or molecules) are still present in the measurement region.

The beam splitter unit may be configured to distribute the power of the laser beam equally, i.e. with a proportion of 50 : 50, to the first partial beam and to the second partial beam. However, an equal distribution of the power of the laser beam by the beam splitter is not mandatory, especially when one or more optical attenuators are used to equalize the intensity detected by the respective photodetectors, as is described in more detail below. When the difference between the intensity of the first partial beam and the intensity of the second partial beam detected by the respective photodetectors is zero in case that no particles are present in the measurement region, the difference between the intensity of the first partial beam and the intensity of the second partial beam is a direct measure for the (relative) attenuation that is due to the presence of one or more particles passing through the measurement region. Moreover, when the difference signal is zero when no particles are present in the measurement region, it is possible to increase the gain of the signal electronics that processes the difference signal without causing saturation of the signal electronics.

In one embodiment, at least one optical attenuator is arranged in the signal path and/or in the reference path to equalize the intensity of the first partial beam detected by the first photodetector and the intensity of the second partial beam detected by the second photodetector when access of the particles to the measurement region is blocked, i.e. when no particles to be detected pass through the measurement region. In case that the intensity detected by the first photodetector and the intensity detected by the second photodetector are not equal when no particles pass through the measurement region even though the power of the light beam is evenly distributed among the first partial beam and the second partial beam, one or more optical attenuators can be introduced into the signal path and/or the reference path to equalize both intensities. The optical attenuator(s) may be configured to generate a fixed amount of attenuation of the power (or intensity) of the first or second partial beam, respectively. However, it is also possible that the attenuation that is generated by the optical attenuator(s) is variable. In this case, the variable optical attenuator(s) may either be manually or electrically controlled. Optical attenuator(s) that are suitable for the present purposes are well-known in the art and may use a variety of principles for their functioning. For instance, the optical attenuator(s) may be fiber-based, e.g. using doped fibers or the like, or may comprise an absorbing material to attenuate the power of the first/second partial beam in free beam propagation.

In a further embodiment, a section of the signal path that comprises the measurement region is arranged in a measurement chamber that is sealed from the environment. In this case, the measurement region or measurement volume is arranged in the interior of the measurement chamber which is hermetically sealed from the environment. The arrangement of the measurement region in the sealed measurement chamber is necessary in order to detect or characterize particles under vacuum or high-pressure conditions in a vacuum chamber or a (high-)pressure chamber, in high- or low-temperature environments in a high- or low-temperature chamber, or in chemically aggressive media in a chemical processing chamber, etc.

In one development of this embodiment, a first optical fiber in the signal path is configured to guide the first partial beam to the measurement region in the measurement chamber and/or a second optical fiber in the signal path is configured to guide the first partial beam from the measurement region out of the measurement chamber. By guiding the first partial beam vial optical fibers to and from the measurement region that is arranged in the measurement chamber, it is possible to arrange electronic or opto-electronical components such as photodetectors outside of the measurement chamber so that these can be protected from the typically harsh conditions that prevail in the interior of the measurement chamber.

In a further development, the particle sensor further comprises: a first fiber feedthrough to introduce the first optical fiber into the measurement chamber and/or a second fiber feedthrough to introduce the second optical fiber into the measurement chamber. The fiber feedthroughs are configured to introduce a respective fiber into the measurement chamber and to provide a gas-tight, hermetical seal between the environment outside of the measurement chamber and the environment inside of the measurement chamber.

In a further embodiment, the particle sensor further comprises at least one beam-shaping optical element configured to shape the first partial beam to generate a pre-defined intensity distribution of the first partial beam in the measurement region, the at least one beam-shaping optical element preferably being arranged in the measurement chamber. The at least one beam-shaping optical element may be e.g. a lens or a mirror and is configured to shape the beam profile of the first partial beam to generate the pre-defined intensity distribution in the measurement region. Within the context of the present application, the intensity distribution relates to the intensity distribution over a cross-section of the first partial beam in a plane perpendicular to the propagation direction of the first partial beam and to the portion of the signal path along the propagation direction that passes through the measurement region. The pre-defined intensity distribution may be e.g. a Gaussian intensity distribution, a top-hat intensity distribution, a line-shaped intensity distribution (line focus), etc. The cross-section may vary e.g. in size or shape along the propagation direction of the first partial beam in the measurement region.

In case that the measurement region is arranged in the measurement chamber, the beam-shaping optical element is typically also arranged in the interior of the measurement chamber. In this case, the first partial beam may propagate along the signal path from an output end of the first optical fiber to the beam-shaping optical element in free beam propagation. Alternatively, the beam shaping optical element may be located at the output end of the first optical fiber, e.g. integrated into the fiber coupling unit.

In a further embodiment, the particle sensor further comprises at least one further beam-shaping optical element configured to shape the first partial beam after propagation through the measurement region, the at least one further beam-shaping optical element preferably being arranged in the measurement chamber. The further beam-shaping element may be configured to (re-)collimate the first partial beam before the first partial beam impinges upon the first photodetector. When the measurement region is formed in the measurement chamber, the further beam shaping element can be configured to collimate the first partial beam before the first partial beam impinges in free beam propagation on an input end of the second optical fiber that guides the first partial beam out of the measurement chamber. Alternatively, the further beam shaping element may be located at the input end of the second optical fiber.

In order to compensate for intensity fluctuations of the light source, the optical path length of the signal path from the beam splitter unit to the first photodetector and the optical path length of the reference path from the beam splitter unit to the second photodetector are chosen to be equal to one another. In this way, the intensities detected by both photodetectors at a given point in time correspond to the intensity and thus the intensity fluctuations of the light beam at one and the same point in time.

In a further embodiment, a fiber length of at least one optical fiber arranged in the signal path and/or a fiber length of at least one optical fiber arranged in the reference path are selected to compensate for a difference between an optical path length of the signal path and an optical path length of the reference path. In general, the reference path has one or more optical elements (lenses, prisms, mirrors, etc.) for guiding the second partial beam to the second photodetector, but does not require an excessive optical path length. In contrast thereto, the signal path may have a considerable optical path length, in particular when the measurement region is formed in a measurement chamber. If the optical path lengths of the signal path and of the reference path differ significantly from each other, it is advantageous to compensate for the difference of the path lengths by using on or more optical fibers that allow to increase the optical path length. For instance, an optical fiber that has a suitable fiber length to provide for the compensation may be placed in the reference path.

In a further embodiment, at least one of the light source, the beam splitter unit, or the at least one optical attenuator are fiber-based (based on fiber optics). In addition to optical fibers that are arranged in the light path, in the signal path and/or in the reference path, also the optical elements of the particle sensor may be fiber-based. For instance, the light source may be designed as a fiber-coupled laser diode and/or the beam splitter unit may be a fiber-based beam splitter that splits the light beam that is guided in an optical fiber into the first partial beam and the second partial beam. The optical attenuators may also be implemented as (fixed or variable) fiber-based attenuators. The same applies to the beam shaping element(s) of the particle detector. When the light source is configured as a fiber-coupled laser diode, the need for a beam shaping optical element, e.g. a lens, that collimates the light beam before the light beam impinges on the beam splitter unit may be dispensed with. In particular, it is possible to implement the particle sensor so that the light beam, the first partial beam (with the exception of the measurement region) and the second partial beam are entirely guided in optical fibers.

In a further embodiment, the first photodetector is a first photodiode and the second photodetector is a second photodiode. For the present particle sensor, different types of photodetectors may be used. The use of photodiodes as photodetectors is advantageous e.g. when the difference between the intensity of the first partial beam and the intensity of the second partial beam should be determined based on a subtraction of electronic signals after opto-electronic conversion in the respective photodiode.

In one development, the first photodiode and the second photodiode are arranged in series to detect the difference between the intensity of the first partial beam and the intensity of the second partial beam. In this case, the two photodiodes form a differential photodiode that is configured to determine the difference between the intensity of the first partial beam and the intensity of the second partial beam. In such a series arrangement, the photocurrents of the two photodiodes cancel each other when they - or the corresponding intensities detected by the photodiodes - are equal.

The difference signal of the photocurrents may be sent to a current-to-voltage converter, e.g. to a transimpedance amplifier, that produces an output voltage that is proportional to the difference between the detected intensities and can be used for the detection or characterization of the particles.

In an alternative embodiment, the particle sensor further comprises: a difference amplifier connected to the first photodetector and to the second photodetector to determine the difference between the intensity of the first partial beam and the intensity of the second partial beam. In this embodiment, the signals of the two photodetectors after opto-electronic conversion are provided to the inputs of a difference amplifier. As indicated above, in order to avoid saturation of the difference amplifier when providing a high gain, it is advantageous when the intensities of the two partial beams detected by the two photodetectors are equal when no particles are present in the measurement region.

It will be understood that the difference between the intensity of the first partial beam and the intensity of the second partial beam may be determined in many ways and is not limited to the two approaches described above. For instance, the (analog) electronic signals may be converted to digital signals before determining the difference signal. In either case, based on the difference signal, the presence of a particle in the measurement region may be determined in a suitable evaluation unit of the particle sensor. The evaluation unit may be configured as a suitable hardware and/or software.

As indicated above, the presence of a particle in the measurement region causes a reduction of the intensity of the first partial beam on the first photodetector. Consequently, the difference between the intensity of the first partial beam and the intensity of the second partial beam increases. In general, the (temporal) reduction of the intensity of the difference signal increases with increasing particle size. Therefore, based on a suitable calibration using particles with known particle sized, the evaluation unit can determine the sizes of the particles that pass through the measurement region.

In a further embodiment, the light source is selected from the group consisting of: laser source, LED, and superluminescent LED. Preferably, a light beam in the form of a laser beam is used in the particle sensor described herein. However, other types of light beams that are generated e.g. by a LED or a superluminescent LED may be used as well for this purpose.

A second aspect relates to a device, in particular to an EUV radiation generating device, comprising: a measurement chamber having a measurement region that is accessible to particles and at least one particle sensor as described above that is configured to detect, in particular to characterize, the particles in the measurement region. The characterization of the particles may include - but is not limited to - the determination of the particle size. The device may be an optical device such as an EUV radiation generating device. However, the device may be any other kind of device that has a chamber with a measurement region which is accessible to particles. The particles may for instance be metallic particles, mineral particles, organic particles etc. The particles may propagate or flow in a gas, a liquid, or in vacuum. As described above, the particle sensor may be used in many application fields in order to characterise solid, liquid or gaseous particles, e.g. soot particles, or particle flows.

In one embodiment, the measurement chamber is selected from the group consisting of: vacuum chamber, high-pressure chamber, low-temperature chamber, high-temperature chamber, and chemical processing chamber. The particle sensor that has been described above may be used to detect or characterize particles inside a measurement chamber where harsh environmental conditions prevail. As indicated above, in this case, the first partial beam is typically guided into the measurement chamber via a first optical fiber and is guided out of the measurement chamber in the direction of the first photodetector via a second optical fiber. Within the meaning of the present application, a vacuum chamber is defined as having a pressure of less than 50 mbar in its interior, a high-pressure chamber is defined as having a pressure of more than 1,5 bar in its interior, a low-temperature chamber is defined as having a temperature of less than -20°C in its interior and a high-temperature chamber is defined as having a temperature of more than 70°C in its interior.

The particle sensor may e.g. be used in a device in the form of an EUV radiation generating device in order to detect or characterize particles that are present in a vacuum chamber. Such an EUV radiation generating device generally comprises a drive laser arrangement for generating a drive laser beam, as well as a beam guiding device for guiding the drive laser beam to the vacuum chamber. The drive laser beam is focused in a target region of the vacuum chamber, in which a target material in the form of tin particles or tin droplets is introduced. When irradiated by the drive laser beam, a respective particle enters a plasma state and then emits EUV radiation. The particles of the target material which are guided to the target region, as well as the particles which are generated upon impact of the laser beam on the target material (upon vaporisation of the target material), may be detected or characterized with the aid of the particle sensor described above.

A further aspect of the invention relates to a method for detecting, in particular for characterizing particles, according to claim 16.

Further advantages of the invention may be found in the description and the drawing. Likewise, the features mentioned above and those referred to below may be used independently, or several of them may be used in any desired combinations. The embodiments shown and described are not to be interpreted as an exhaustive list, but rather have an exemplary nature for description of the invention.

In the figures:
- Figure 1: shows a schematic representation of a particle sensor for detecting particles which pass through a measurement region,
- Figure 2: shows a schematic representation of a particle sensor with a measurement region that is arranged in a measurement chamber,
- Figure 3: shows a schematic representation of an EUV radiation generation device which comprises a particle sensor to detect or characterize particles in a vacuum chamber.

In the following description of the drawings, identical reference signs are used for components which are the same or functionally equivalent.

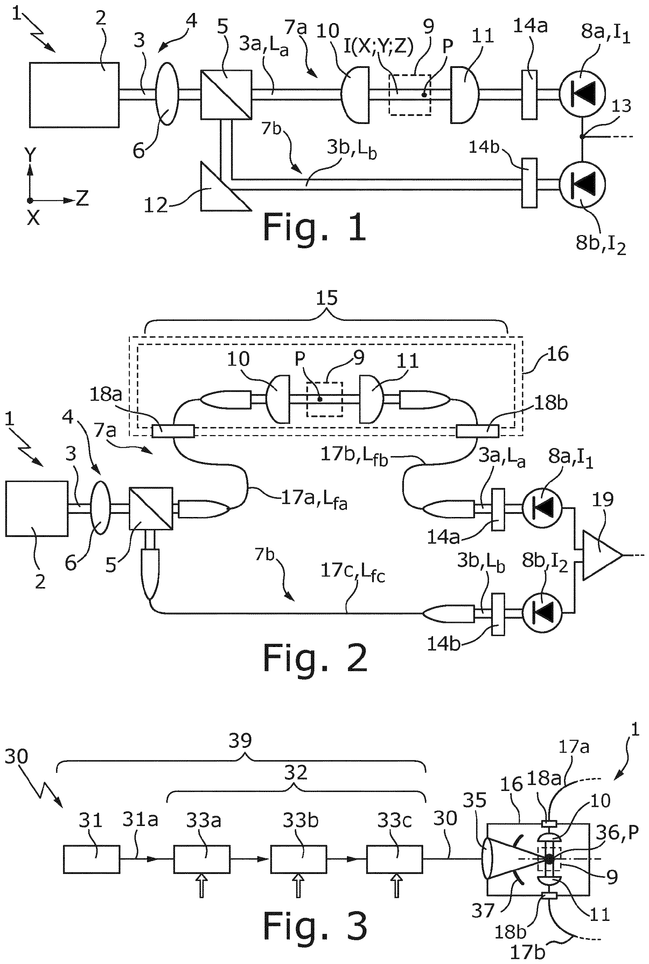

**Figure 1** shows a particle sensor 1 that has a light source 2 that is configured to generate a light beam 3. The light beam 3 propagates in free beam propagation along a light path 4 to a beam splitter unit 5. A lens 6 is arranged in the light path 4 to collimate the light beam 3 before it impinges on the beam splitter unit 5. In the present example, the light source 2 is a laser source and the light beam 3 is a laser beam. However, the use of a light source 2 in the form of a laser source is not mandatory: The light source 2 may alternatively be configured e.g. as a LED or as a superluminescent LED.

The beam splitter unit 5 in the form of a beam splitter cube is configured to split the light beam 3, more precisely the power of the light beam 3, with equal ratio (50 : 50) into a first partial beam 3a and a second partial beam 3b. The first partial beam 3a propagates along a signal path 7a to a first photodetector 8a. The second partial beam 3b propagates along a reference path 7b to a second photodetector 8b. It will be understood that the splitting of the power of the light beam 3 with equal ratio at the beam splitter unit 5 is not mandatory: The splitting of the power of the light beam 3 may be performed with a ratio that differs from an equal ratio, especially when one or more optical attenuators are used, as will be described below.

The signal path 7a passes through a measurement region 9 (measurement volume) that is accessible to particles P. One such particle P that flows through the measurement region 9 is represented in Figure 1. The first partial beam 3a passes through the measurement region 9 with a pre-defined intensity distribution I(x, y, z).

The pre-defined intensity distribution I(x, y, z) of the first partial beam 3a is selected in dependence of the specific application for which the particle sensor 1 is used. In a plane (x, y) perpendicular to the propagation direction (z) of the first partial beam 3a, the intensity distribution I(x, y, z) may have e.g. a Gaussian intensity profile, a top-hat intensity profile or a line-shaped intensity profile. In the present example, the first partial beam 3a is focused in the measurement region 9. However, focusing of the first partial beam 3a in the measurement region 9 is not mandatory.

For generating the pre-defined intensity distribution I(x, y, z), the particle sensor 1 has a beam-shaping optical element 10 that is configured as a lens in the present example. A further beam-shaping optical element 11 is arranged in the signal path 7a after the measurement region 9. In the example shown, the further beam-shaping optical element 11 is also configured as a lens and serves to re-collimate the first partial beam 3a after passing through the measurement region 9. In this way, the fist partial beam 3a impinges on the first photodetector 8a in a collimated fashion.

In the example of Figure 1, the reference path 7b has a beam guiding element in the form of a mirror 12 for redirecting the second partial beam 3b to the second photodetector 8b. In contrast to the signal path 7a, the reference path 7b is not accessible to particles P.

The particle sensor 1 is configured to detect the particles P in the measurement region 9 based on a difference I₁ - I₂ between an intensity I₁ of the first partial beam 3a detected by the first photodetector 8a and an intensity I₂ of the second partial beam 3b detected by the second photodetector 8b. The detection that is based on the difference I₁ - I₂ allows to reduce the sensitivity of the measurement to intensity fluctuations of the light beam 3 that is generated by the light source 2 and increases the signal-to-noise ratio of the particle detection, especially for particles P having small particle sizes.

In the example of Figure 1, in order to determine the difference I₁ - I₂ between the first intensity I₁ and the second intensity I₂, the first photodetector 8a and the second photodetector 8b that are both implemented as photodiodes are connected in series in an electronic circuit that is not represented in greater detail in Figure 1. At a connection point 13 between the two photodiodes 8a,b in the electronic circuit, the photocurrents corresponding to the first and second intensity 1₁, I₂ cancel each other when the first intensity I₁ is equal to the second intensity I₂ (I₁ = I₂). Thus, only the difference I₁ - I₂ (or equivalently | I₁ - I₂ |) between the first intensity I₁ and the second intensity I₂ - or the difference of the corresponding photocurrents - is measured at the connection point 13. A current-to-voltage converter, e.g. a transimpedance amplifier, may be connected to the connection point 13 in order to convert the current at the connection point 13 to a difference voltage that is proportional to the difference I₁ - I₂ between the first intensity I₁ and the second intensity I₂. The difference voltage can then be used in an evaluation unit (not shown) of the particle sensor 1 to detect or characterize particles P that flow through the measurement region 9, as will be explained below.

The presence of a particle P in the measurement region 9 reduces the intensity I₁ of the first partial beam 3a, whereas the intensity I₂ of the second partial beam 3b remains unchanged. Consequently, the difference I₁ - I₂ between the intensity I₁ of the first partial beam 3a and the intensity I₂ of the second partial beam 3b increases. This increase can be attributed to the presence of a particle P that passes through the first partial beam 3a in the measurement region 9. Moreover, the amount of reduction of the first intensity I₁ is proportional to the particle size, as the larger the size of the particle P, the larger is the area of the first partial beam 3a that is obscured by the particle P. Therefore, the amount of reduction of the first intensity I₁ and thus the absolute value of the difference I₁ - I₂ between the intensity I₁ of the first partial beam 3a and the intensity I₂ of the second partial beam 3b is a measure for the size of the particle P passing through the measurement region 9. Therefore, given a suitable calibration of the particle sensor 1 based on particles P with known particle size, the particle sensor 1 or the evaluation unit of the particle sensor 1 allow to characterize the particles P with regard to their particle size, i.e. to determine the size of the particles P.

For improving the signal-to-noise ratio during the detection or characterization of the particles P, it is advantageous when the difference I₁ - I₂ between the intensity I₁ of the first partial beam 3a and the intensity I₂ of the second partial beam 3b is zero when no particles P are present in the measurement region 9 or when the access of particles P to the measurement region 9 is blocked.

To equalize the intensity I₁ of the first partial beam 3a and the intensity I₂ of the second partial beam detected by the respective photodetectors 8a, 8b when no particles are present in the measurement region 9, a first optical attenuator 14a is arranged in the signal path 7a and a second optical attenuator 14b is arranged in the reference path 7b. The attenuation that is provided by the first and second optical attenuators 14a, 14b is set so that the intensity I₁ of the first partial beam 3a detected by the first photodetector 8a and the intensity I₂ of the second partial beam 3b detected by the second photodetector 8b are equal when no particles are present in the measurement region 9. For this purpose, the first and the second optical attenuators 14a, 14b can be configured to provide a fixed or variable attenuation. In the latter case, the variable attenuation may be electronically controlled by a suitable actuating device. It will be understood that the provision of a single optical attenuator 14a, 14b arranged in the signal path 7a or in the reference path 7b, respectively, can be sufficient for equalizing the intensity I₁ of the first partial beam 3a and the intensity I₂ of the second partial beam 3b.

The detection of particles P that is based on the difference I₁ - I₂ between the intensity I₁ of the first partial beam 3a and the intensity I₂ of the second partial beam 3b allows to suppress the influence of intensity fluctuations of the light source 2 on the detection. However, in order to efficiently suppress the intensity fluctuations, an optical path length Lₐ of the signal path 3a should be equal to an optical path length L_{b} of the reference path 3b (Lₐ = L_{b}), so that the intensities I₁, I₂ detected by the photodetectors 8a, 8b are related to the intensity of the light beam 3 at the same point in time.

In the particle sensor 1 shown in Figure 1, the light beam 3 and the first and second partial beams 3a, 3b propagate in free beam propagation along the light path 4, the signal path 7a, and the reference path 7b, respectively. In contrast thereto, in the particle sensor 1 shown in **Figure 2****,** the first partial beam 3a passes through a first and second optical fiber 17a, 17b that are both arranged in the signal path 7a and the second partial beam 3b passes through a third optical fiber 17c that is arranged in the reference path 7b. In the example shown in Figure 2, the fiber lengths L_{fa}, L_{fb}, L_{fc} of the three optical fibers 17a-c are chosen so that the optical path length Lₐ of the signal path 3a is equal to the optical path length L_{b} of the reference path 7b. More specifically, based on the optical path length Lₐ of the signal path 3a, the fiber length L_{fc} of the third optical fiber 17c is chosen so that the optical path length L_{b} of the reference path 3b is equal to the optical path length Lₐ of the signal path 3a.

The particle sensor 1 of Figure 2 differs also from the particle sensor of Figure 1 in that a section 15 of the signal path 3a that comprises the measurement region 9 is arranged in the interior of a measurement chamber 16 which is hermetically sealed from the environment. The first optical fiber 17a is arranged in the signal path 3a between the beam splitter unit 5 and the beam-shaping optical element 10 that is arranged inside of the measurement chamber 16. The second optical fiber 17b is arranged in the signal path 3a between the further beam-shaping optical element 11 and the first photodetector 8a.

A wall of the measurement chamber 16 has a first fiber feedthrough 18a that allows to introduce the first optical fiber 17a into the measurement chamber 16. The first fiber feedthrough 18a hermetically seals the environment outside of the measurement chamber 16 from the interior of the measurement chamber 16. In a similar way, a second fiber feedthrough 18a that is provided in a chamber wall of the measurement chamber 16 allows to introduce the second optical fiber 17b into the measurement chamber 16 and hermetically seals the environment outside of the measurement chamber 16 from the interior of the measurement chamber 16.

In the particle sensor 1 shown in Figure 2, only optical components such as the beam-shaping optical element 10 and the further beam shaping optical element 11 as well as sections of the first and second optical fiber 17a, 17b are arranged in the interior of the measurement chamber 16. By using the first and second optical fibers 17a, 17b and the respective fiber feedthroughs 18a, 18b, a shielding of components of the particle sensor 1, e.g. the light source 2 or the first photodetector 8a, from the interior of the measurement chamber 16 can be provided. Thus, components of the particle sensor 1 that are sensitive to degradation can be arranged outside of the measurement chamber 16 and are therefore protected from the harsh environment that prevails therein.

The measurement chamber 16 may e.g. be a vacuum chamber, a (high-)pressure chamber, a low-temperature or a high-temperature chamber configured to provide a temperature in the interior of the measurement chamber 16 that is e.g. between 4 K (-269°C) and 253 K (-20°C) or between 334 K (+70°C) and 773 K (+500°C), respectively, or a chemical processing chamber containing chemically aggressive media. In all these cases, the interior of the measurement chamber 16 has to be hermetically sealed from the environment.

In the particle sensor 1 of Figure 2, the difference between the intensity I₁ of the first partial beam 3a and the intensity I₂ of the second partial beam 3b is determined by a difference amplifier 19 that is connected to the first and the second photodetector 8a, 8b, respectively. The evaluation of the difference I₁ - I₂, resp., of the electronic signal after opto-electronic conversion may be performed by an evaluation unit as explained in connection with Figure 1. However, it will be understood that there exists a large variety of possibilities to determine the difference between the intensity I₁ of the first partial beam 3a and the intensity I₂ of the second partial beam 3b other than those shown in Figure 1 and Figure 2.

In the particle sensors 1 shown in Figure 1 and in Figure 2, most or all of the optical components may be fiber-based. For instance, the light source 2, the beam splitter unit 5 and the optical attenuators 14a, 14b may all be fiber-based. For instance, the light source 2 may be implemented as a fiber-coupled laser diode. In this way, the beam shaping optical element 6 in the light path 4 that collimates the light beam 3 before the light beam 3 impinges on the beam splitter unit 5 may be dispensed with.

As indicated above, the particle sensor 1 described in connection with Figure 1 and Figure 2 may be used to characterise particles P in many different applications. One such application will be described in more detail below with reference to an EUV radiation generation device 30 with the aid of **Figure** 3. The EUV radiation generation device 30 comprises a beam source 31, an amplifier arrangement 32 having three optical amplifiers, or amplifier stages 33a-c, a beam guiding device 34 (not represented in detail), and a focusing device 35. The focusing device 35 is used to focus a drive laser beam 31a, generated by the beam source 31 and amplified by the amplifier arrangement 32, on a target region 36 in a vacuum chamber16, in which particles P are introduced. The particles P, or an individual tin drop, are used as a target material and are irradiated by means of the drive laser beam 31a. The tin drop in this case enters a plasma state and emits EUV radiation, which is focused by means of a collector mirror 37. In the example shown in Figure 3, the collector mirror 37 comprises an opening for the laser beam 31a to pass through. In the example shown, the beam source 31 comprises two CO₂ lasers in order to generate a pre-pulse and a main pulse, which together are amplified in the amplifier arrangement 32 and focused onto the target region 36. The beam source 31 forms together with the amplifier arrangement 32 a drive laser arrangement 39 of the EUV radiation generation device 30.

As may likewise be seen in Figure 3, the first optical fiber 17a of the particle sensor 1 of Figure 2 is introduced into the interior of the vacuum chamber 16 via the first fiber feedthrough 18a and the second optical fiber 17b of the particle sensor 1 is introduced into the vacuum chamber 16 via the second fiber feedthrough 18b. The measurement region 9 extends through the target region 36 with the particles P in the form of tin droplets. Therefore, with the aid of the particle sensor 1, it is possible to detect or to characterize the particles P in the vacuum chamber 16, or their movement to the target region 36. The size of the particles P, or the size of the smaller particles generated during vaporization of a respective tin droplet by the drive laser beam 31a, may also be determined with the aid of the particle sensor 1.

## Claims

1. Particle sensor (1) based on light extinction, comprising:
a light source (2) configured to generate a light beam (3) propagating along a light path (4),
a beam splitter unit (5) configured to split the light beam (3) into a first partial beam (3a) propagating along a signal path (7a) and a second partial beam (3b) propagating along a reference path (7b), the signal path (7a) passing through a measurement region (9) that is accessible to particles (P),
a first photodetector (8a) arranged in the signal path (7a) and configured to detect an intensity (I₁) of the first partial beam (3a) after propagating through the measurement region (9), and
a second photodetector (8b) arranged in the reference path (7b) and configured to detect an intensity (I₂) of the second partial beam (3b),
wherein the particle sensor (1) is configured to detect, in particular to characterize, particles (P) in the measurement region (9) based on a difference (I₁ - I₂) between the intensity (I₁) of the first partial beam (3a) and the intensity (I₂) of the second partial beam (3b),
**characterized in that**
an optical path length (Lₐ) of the signal path (7a) from the beam splitter unit (5) to the first photodetector (8a) and an optical path length (L_{b}) of the reference path (7b) from the beam splitter unit (5) to the second photodetector (5b) are equal to one another.

2. Particle sensor according to claim 1, wherein at least one optical attenuator (14a, 14b) is arranged in the signal path (7a) and/or in the reference path (7b) to equalize the intensity (I₁) of the first partial beam (3a) detected by the first photodetector (8a) and the intensity (I₂) of the second partial beam (3b) detected by the second photodetector (8b) when access of the particles (P) to the measurement region (9) is blocked.

3. Particle sensor according to any one of the preceding claims, wherein a section (15 ) of the signal path (7a) that comprises the measurement region (9) is arranged in a measurement chamber (16) that is sealed from the environment.

4. Particle sensor according to claim 3, wherein a first optical fiber (17a) in the signal path (7a) is configured to guide the first partial beam (3a) to the measurement region (9) in the measurement chamber (16) and/or a second optical fiber (17b) in the signal path (7a) is configured to guide the first partial beam (3a) from the measurement region (9) out of the measurement chamber (16).

5. Particle sensor according to claim 4, further comprising: a first fiber feedthrough (18a) to introduce the first optical fiber (17a) into the measurement chamber (16) and/or a second fiber feedthrough (18b) to introduce the second optical fiber (17b) into the measurement chamber (16).

6. Particle sensor according to any one of the preceding claims, further comprising: at least one beam-shaping optical element (10) configured to shape the first partial beam (3a) to generate a pre-defined intensity distribution (I(x,y,z)) of the first partial beam (3a) in the measurement region (9), the at least one beam-shaping optical element (10) preferably being arranged in the measurement chamber (16).

7. Particle sensor according to any one of the preceding claims, further comprising: at least one further beam-shaping optical element (11) configured to shape the first partial beam (3a) after propagation through the measurement region (9), the at least one further beam-shaping optical element (11) preferably being arranged in the measurement chamber (16).

8. Particle sensor according to any one of the preceding claims, wherein a fiber length (L_{fa}, L_{fb}) of at least one optical fiber (17a, 17b) arranged in the signal path (7a) and/or a fiber length (L_{fc}) of at least one optical fiber (17c) arranged in the reference path (3b) are selected to compensate for a difference between an optical path length (Lₐ) of the signal path (3a) and an optical path length (L_{b}) of the reference path (3b).

9. Particle sensor according to any one of the preceding claims, wherein at least one of the light source (2), the beam splitter unit (5), or the at least one optical attenuator (14a, 14b) are fiber-based.

10. Particle sensor according to any one of the preceding claims, wherein the first photodetector is a first photodiode (8a) and the second photodetector is a second photodiode (8b).

11. Particle sensor according to claim 10, wherein the first photodiode (8a) and the second photodiode (8b) are arranged in series to detect the difference (I₁ - I₂) between the intensity (I₁) of the first partial beam (3a) and the intensity (I₂) of the second partial beam (3b).

12. Particle sensor according to any one of claims 1 to 10, further comprising: a difference amplifier (19) connected to the first photodetector (8a) and to the second photodetector (8b) to determine the difference (I₁ - I₂) between the intensity (I₁) of the first partial beam (3a) and the intensity (I₂) of the second partial beam (3b).

13. Particle sensor according to any one of the preceding claims, wherein the light source (2) is selected from the group consisting of: laser source, LED, and superluminescent LED.

14. Device, in particular EUV radiation generating device (30), comprising:
a measurement chamber (16) having a measurement region (9) that is accessible to particles (P), and
at least one particle sensor (1) according to any one of the preceding claims that is configured to detect, in particular to characterize, the particles (P) in the measurement region (9).

15. Device according to claim 14, wherein the measurement chamber is selected from the group consisting of: vacuum chamber (16), high-pressure chamber, low-temperature chamber, high-temperature chamber, and chemical processing chamber.

16. Method for detecting, in particular for characterizing, particles (P) based on light extinction, comprising:
generating a light beam (3) propagating along a light path (4),
splitting the light beam (3) into a first partial beam (3a) propagating along a signal path (7a) and a second partial beam (3b) propagating along a reference path (7b), the signal path (3a) passing through a measurement region (9) that is accessible to the particles (P),
detecting an intensity (I₁) of the first partial beam (3a) after propagating through the measurement region (9) by a first photodetector (8a) arranged in the signal path (7a),
detecting an intensity (I₂) of the second partial beam (3b) by a second photodetector (8b) arranged in the reference path (7b), and
detecting, in particular characterizing, particles (P) in the measurement region (9) based on a difference (I₁ - I₂) between the intensity (I₁) of the first partial beam (3a) and the intensity (I₂) of the second partial beam (3b)
**characterized in that**
an optical path length (Lₐ) of the signal path (7a) from the beam splitter unit (5) to the first photodetector (8a) and an optical path length (L_{b}) of the reference path (7b) from the beam splitter unit (5) to the second photodetector (8b) are chosen to be equal to one another.

## Patentansprüche

1. Partikelsensor (1) basierend auf Lichtextinktion, umfassend:
eine Lichtquelle (2), die dazu konfiguriert ist, einen Lichtstrahl (3) zu erzeugen, der sich entlang eines Lichtwegs (4) ausbreitet,
eine Strahlteilereinheit (5), die dazu konfiguriert ist, den Lichtstrahl (3) in einen ersten Teilstrahl (3a), der sich entlang eines Signalwegs (7a) ausbreitet, und einen zweiten Teilstrahl (3b), der sich entlang eines Referenzpfads (7b) ausbreitet, aufzuteilen, wobei der Signalweg (7a) durch einen Messbereich (9) verläuft, der für Partikel (P) zugänglich ist,
einen ersten Photodetektor (8a), der in dem Signalweg (7a) angeordnet und dazu konfiguriert ist, eine Intensität (I₁) des ersten Teilstrahls (3a) nach Ausbreitung durch den Messbereich (9) zu erfassen, und
einen zweiten Photodetektor (8b), der in dem Referenzweg (7b) angeordnet und dazu konfiguriert ist, eine Intensität (I₂) des zweiten Teilstrahls (3b) zu erfassen,
wobei der Partikelsensor (1) dazu konfiguriert ist, Partikel (P) in dem Messbereich (9) basierend auf einer Differenz (I₁ - I₂) zwischen der Intensität (I₁) des ersten Teilstrahls (3a) und der Intensität (I₂) des zweiten Teilstrahls (3b) zu erfassen, insbesondere zu charakterisieren,
**dadurch gekennzeichnet, dass** eine Länge des Lichtwegs (Lₐ) des Signalwegs (7a) von der Strahlteilereinheit (5) zum ersten Photodetektor (8a) und eine Länge des Lichtwegs (L_{b}) des Referenzwegs (7b) von der Strahlteilereinheit (5) zum zweiten Photodetektor (5b) einander gleich sind.

2. Partikelsensor nach Anspruch 1, wobei mindestens ein optisches Dämpfungsglied (14a, 14b) in dem Signalweg (7a) und/oder in dem Referenzweg (7b) angeordnet ist, um die Intensität (I₁) des von dem ersten Photodetektor (8a) erfassten ersten Teilstrahls (3a) und die Intensität (I₂) des von dem zweiten Photodetektor (8b) erfassten zweiten Teilstrahls (3b) auszugleichen, wenn der Zugang der Partikel (P) zu dem Messbereich (9) blockiert ist.

3. Partikelsensor nach einem der vorhergehenden Ansprüche, wobei ein Abschnitt (15) des Signalwegs (7a), der den Messbereich (9) umfasst, in einer Messkammer (16) angeordnet ist, die gegenüber der Umgebung abgedichtet ist.

4. Partikelsensor nach Anspruch 3, wobei eine erste optische Faser (17a) in dem Signalweg (7a) dazu konfiguriert ist, den ersten Teilstrahl (3a) zu dem Messbereich (9) in der Messkammer (16) zu führen und/oder eine zweite optische Faser (17b) in dem Signalweg (7a) dazu konfiguriert ist, den ersten Teilstrahl (3a) von dem Messbereich (9) aus der Messkammer (16) herauszuführen.

5. Partikelsensor nach Anspruch 4, ferner umfassend: eine erste Faserdurchführung (18a) zum Einführen der ersten optischen Faser (17a) in die Messkammer (16) und/oder eine zweite Faserdurchführung (18b) zum Einführen der zweiten optischen Faser (17b) in die Messkammer (16).

6. Partikelsensor nach einem der vorhergehenden Ansprüche, ferner umfassend: mindestens ein strahlformendes optisches Element (10), das dazu konfiguriert ist, den ersten Teilstrahl (3a) zu formen, um eine vordefinierte Intensitätsverteilung (I(x,y,z)) des ersten Teilstrahls (3a) in dem Messbereich (9) zu erzeugen, wobei das mindestens eine strahlformende optische Element (10) vorzugsweise in der Messkammer (16) angeordnet ist.

7. Partikelsensor nach einem der vorhergehenden Ansprüche, ferner umfassend: mindestens ein weiteres strahlformendes optisches Element (11), das dazu konfiguriert ist, den ersten Teilstrahl (3a) nach Ausbreitung durch den Messbereich (9) zu formen, wobei das mindestens eine weitere strahlformende optische Element (11) vorzugsweise in der Messkammer (16) angeordnet ist.

8. Partikelsensor nach einem der vorhergehenden Ansprüche, wobei eine Faserlänge (Lfa, L_{fb}) mindestens eine optische Faser (17a, 17b), die in dem Signalweg (7a) angeordnet ist, und/oder eine Faserlänge (L_{fc}) mindestens einer optischen Faser (17c), die in dem Referenzweg (3b) angeordnet ist, ausgewählt werden, um eine Differenz zwischen einer Länge des Lichtwegs (Lₐ) des Signalwegs (3a) und einer Länge des Lichtwegs (L_{b}) des Referenzwegs (3b) zu kompensieren.

9. Partikelsensor nach einem der vorhergehenden Ansprüche, wobei mindestens eines der Lichtquelle (2), der Strahlteilereinheit (5) oder des mindestens einen optischen Dämpfungsglieds (14a, 14b) faserbasiert ist.

10. Partikelsensor nach einem der vorhergehenden Ansprüche, wobei der erste Photodetektor eine erste Photodiode (8a) ist und der zweite Photodetektor eine zweite Photodiode (8b) ist.

11. Partikelsensor nach Anspruch 10, wobei die erste Photodiode (8a) und die zweite Photodiode (8b) in Reihe angeordnet sind, um die Differenz (I₁ - I₂) zwischen der Intensität (I₁) des ersten Teilstrahls (3a) und der Intensität (I₂) des zweiten Teilstrahls (3b) zu erfassen.

12. Partikelsensor nach einem der Ansprüche 1 bis 10, ferner umfassend: einen Differenzverstärker (19), der mit dem ersten Photodetektor (8a) und dem zweiten Photodetektor (8b) verbunden ist, um die Differenz (I₁ - I₂) zwischen der Intensität (I₁) des ersten Teilstrahls (3a) und der Intensität (I₂) des zweiten Teilstrahls (3b) zu erfassen.

13. Partikelsensor nach einem der vorhergehenden Ansprüche, wobei die Lichtquelle (2) ausgewählt ist aus der Gruppe bestehend aus: Laserquelle, LED und superlumineszierende LED.

14. Vorrichtung, insbesondere eine EUV-Strahlungserzeugungsvorrichtung (30), umfassend:
eine Messkammer (16), die einen Messbereich (9) aufweist, der für Partikel (P) zugänglich ist, und
mindestens einen Partikelsensor (1) nach einem der vorhergehenden Ansprüche, der dazu konfiguriert ist, die Partikel (P) in dem Messbereich (9) zu erfassen, insbesondere zu charakterisieren.

15. Vorrichtung nach Anspruch 14, wobei die Messkammer ausgewählt ist aus der Gruppe bestehend aus: Vakuumkammer (16), Hochdruckkammer, Niedertemperaturkammer, Hochtemperaturkammer und chemischer Verarbeitungskammer.

16. Verfahren zum Erfassen, insbesondere zum Charakterisieren, von Partikeln (P) basierend auf Lichtextinktion, umfassend:
Erzeugen eines Lichtstrahls (3), der sich entlang eines Lichtwegs (4) ausbreitet,
Aufspalten des Lichtstrahls (3) in einen ersten Teilstrahl (3a), der sich entlang eines Signalwegs (7a) ausbreitet, und einen zweiten Teilstrahl (3b), der sich entlang eines Referenzwegs (7b) ausbreitet, wobei der Signalweg (3a) einen für die Partikel (P) zugänglichen Messbereich (9) durchläuft,
Erfassen einer Intensität (I₁) des ersten Teilstrahls (3a) nach Durchlaufen des Messbereichs (9) durch einen in dem Signalweg (7a) angeordneten ersten Photodetektor (8a),
Erfassen einer Intensität (I₂) des zweiten Teilstrahls (3b) durch einen zweiten Photodetektor (8b), der in dem Referenzweg (7b) angeordnet ist, und
Erfassen, insbesondere Charakterisieren, von Partikeln (P) in dem Messbereich (9) basierend auf einer Differenz (I₁ - I₂) zwischen der Intensität (I₁) des ersten Teilstrahls (3a) und der Intensität (I₂) des zweiten Teilstrahls (3b),
**dadurch gekennzeichnet,**
**dass** eine Länge des Lichtwegs (Lₐ) des Signalwegs (7a) von der Strahlteilereinheit (5) zu dem ersten Photodetektor (8a) und eine Länge des Lichtwegs (L_{b}) des Referenzsignals (7b) von der Strahlteilereinheit (5) zu dem zweiten Photodetektor (8b) so gewählt sind, dass sie einander gleich sind.

## Revendications

1. Capteur de particules (1) basé sur l'extinction de lumière, comprenant :
une source de lumière (2) configurée pour générer un faisceau de lumière (3) se propageant le long d'un trajet de lumière (4),
une unité de séparation de faisceau (5) configurée pour séparer le faisceau de lumière (3) en un premier faisceau partiel (3a) se propageant le long d'un trajet de signal (7a) et un second faisceau partiel (3b) se propageant le long d'un trajet de référence (7b), le trajet de signal (7a) traversant une région de mesure (9) qui est accessible à des particules (P),
un premier photodétecteur (8a) agencé dans le trajet de signal (7a) et configuré pour détecter une intensité (I₁) du premier faisceau partiel (3a) après propagation à travers la région de mesure (9), et
un second photodétecteur (8b) agencé dans le trajet de référence (7b) et configuré pour détecter une intensité (I₂) du second faisceau partiel (3b),
dans lequel le capteur de particules (1) est configuré pour détecter, en particulier pour caractériser, des particules (P) dans la région de mesure (9) sur la base d'une différence (I₁ - I₂) entre l'intensité (I₁) du premier faisceau partiel (3a) et l'intensité (I₂) du second faisceau partiel (3b),
**caractérisé en ce**
**qu'**une longueur de trajet optique (Lₐ) du trajet de signal (7a) allant de l'unité de séparation de faisceau (5) au premier photodétecteur (8a) et une longueur de trajet optique (L_{b}) du trajet de référence (7b) allant de l'unité de séparation de faisceau (5) au second photodétecteur (5b) sont égales l'une à l'autre.

2. Capteur de particules selon la revendication 1, dans lequel au moins un atténuateur optique (14a, 14b) est agencé dans le trajet de signal (7a) et/ou dans le trajet de référence (7b) pour égaliser l'intensité (I₁) du premier faisceau partiel (3a) détectée par le premier photodétecteur (8a) et l'intensité (I₂) du second faisceau partiel (3b) détectée par le second photodétecteur (8b) lorsque l'accès des particules (P) à la région de mesure (9) est bloqué.

3. Capteur de particules selon l'une quelconque des revendications précédentes, dans lequel une section (15) du trajet de signal (7a) qui comprend la région de mesure (9) est agencée dans une chambre de mesure (16) qui est scellée par rapport à l'environnement.

4. Capteur de particules selon la revendication 3, dans lequel une première fibre optique (17a) dans le trajet de signal (7a) est configurée pour guider le premier faisceau partiel (3a) vers la région de mesure (9) dans la chambre de mesure (16) et/ou une seconde fibre optique (17b) dans le trajet de signal (7a) est configurée pour guider le premier faisceau partiel (3a) à partir de la région de mesure (9) hors de la chambre de mesure (16).

5. Capteur de particules selon la revendication 4, comprenant en outre : une première traversée de fibre (18a) pour introduire la première fibre optique (17a) dans la chambre de mesure (16) et/ou une seconde traversée de fibre (18b) pour introduire la seconde fibre optique (17b) dans la chambre de mesure (16).

6. Capteur de particules selon l'une quelconque des revendications précédentes, comprenant en outre : au moins un élément optique de mise en forme de faisceau (10) configuré pour façonner le premier faisceau partiel (3a) pour générer une distribution d'intensité prédéfinie (I(x,y,z)) du premier faisceau partiel (3a) dans la région de mesure (9), l'au moins un élément optique de mise en forme de faisceau (10) étant de préférence agencé dans la chambre de mesure (16).

7. Capteur de particules selon l'une quelconque des revendications précédentes, comprenant en outre : au moins un autre élément optique de mise en forme de faisceau (11) configuré pour façonner le premier faisceau partiel (3a) après propagation à travers la région de mesure (9), l'au moins un autre élément optique de mise en forme de faisceau (11) étant de préférence agencé dans la chambre de mesure (16).

8. Capteur de particules selon l'une quelconque des revendications précédentes, dans lequel une longueur de fibre (L_{fa}, L_{fb}) d'au moins une fibre optique (17a, 17b) agencée dans le trajet de signal (7a) et/ou une longueur de fibre (L_{fc}) d'au moins une fibre optique (17c) agencée dans le trajet de référence (3b) est/sont sélectionnée(s) pour compenser une différence entre une longueur de trajet optique (Lₐ) du trajet de signal (3a) et une longueur de trajet optique (L_{b}) du trajet de référence (3b).

9. Capteur de particules selon l'une quelconque des revendications précédentes, dans lequel au moins un de la source de lumière (2), de l'unité de séparation de faisceau (5) ou de l'au moins un atténuateur optique (14a, 14b) est basé sur fibre.

10. Capteur de particules selon l'une quelconque des revendications précédentes, dans lequel le premier photodétecteur est une première photodiode (8a) et le second photodétecteur est une seconde photodiode (8b).

11. Capteur de particules selon la revendication 10, dans lequel la première photodiode (8a) et la seconde photodiode (8b) sont agencées en série pour détecter la différence (I₁ - I₂) entre l'intensité (I₁) du premier faisceau partiel (3a) et l'intensité (I₂) du second faisceau partiel (3b).

12. Capteur de particules selon l'une quelconque des revendications 1 à 10, comprenant en outre : un amplificateur de différence (19) connecté au premier photodétecteur (8a) et au second photodétecteur (8b) pour déterminer la différence (I₁ - I₂) entre l'intensité (I₁) du premier faisceau partiel (3a) et l'intensité (I₂) du second faisceau partiel (3b).

13. Capteur de particules selon l'une quelconque des revendications précédentes, dans lequel la source de lumière (2) est sélectionnée dans le groupe consistant en : source laser, DEL et DEL superluminescente.

14. Dispositif, en particulier dispositif générateur de rayonnement UVE (30), comprenant :
une chambre de mesure (16) ayant une région de mesure (9) qui est accessible à des particules (P), et
au moins un capteur de particules (1) selon l'une quelconque des revendications précédentes qui est configuré pour détecter, en particulier pour caractériser, les particules (P) dans la région de mesure (9).

15. Dispositif selon la revendication 14, dans lequel la chambre de mesure est choisie dans le groupe consistant en : chambre à vide (16), chambre haute pression, chambre basse température, chambre haute température et chambre de traitement chimique.

16. Procédé de détection, en particulier de caractérisation, de particules (P) basé sur l'extinction de lumière, comprenant :
la génération d'une source de lumière (3) se propageant le long d'un trajet de lumière (4),
la séparation du faisceau de lumière (3) en un premier faisceau partiel (3a) se propageant le long d'un trajet de signal (7a) et en un second faisceau partiel (3b) se propageant le long d'un trajet de référence (7b), le trajet de signal (3a) traversant une région de mesure (9) qui est accessible aux particules (P),
la détection d'une intensité (I₁) du premier faisceau partiel (3a) après propagation à travers la région de mesure (9) par un premier photodétecteur (8a) agencé dans le trajet de signal (7a),
la détection d'une intensité (I₂) du second faisceau partiel (3b) par un second photodétecteur (8b) agencé dans le trajet de référence (7b), et
la détection, en particulier la caractérisation, de particules (P) dans la région de mesure (9) sur la base d'une différence (I₁ - I₂) entre l'intensité (I₁) du premier faisceau partiel (3a) et l'intensité (I₂) du second faisceau partiel (3b),
**caractérisé en ce qu'**une
longueur de trajet optique (Lₐ) du trajet de signal (7a) allant de l'unité de séparation de faisceau (5) au premier photodétecteur (8a) et une longueur de trajet optique (L_{b}) du trajet de référence (7b) allant de l'unité de séparation de faisceau (5) au second photodétecteur (8b) sont choisies pour être égales l'une à l'autre.
